# EUROPEAN PATENT APPLICATION

(11) **EP 2 129 041 A1**
(43) Date of publication of application: **02.12.2009**
(21) Application number: 08009650.6
(22) Date of filing: 27.05.2008
(51) Int. Cl.: H04L 12/24, G05B 19/042, G06F 9/445

(54) **A network and method for updating a plurality of devices in such a network**

(71) Applicant: Siemens Milltronics Process Instruments Inc., Peterborough, Ontario K9J 7B1 (CA)
(72) Inventor: Basson, Dominique, Peterborough, ON K9K 2E6 (CA)
(74) Representative: Maier, Daniel Oliver

(57) **Abstract**

A network and method for updating a plurality of devices in such a network

To minimize the effort required for updating a plurality of devices (2 to 9) in a network (1),
- at least one primary master device (2) provides update information for the remaining slave devices (4 to 9),
- one or more predetermined slave devices (4, 5) are enabled to operate in a temporary master mode,
- the primary master device (2) downloads the update information to the predetermined slave devices (4, 5), and
- the predetermined slave devices (4, 5) switch, when the download is completed, into the temporary master mode for downloading the update information to respective associated ones of the other slave devices (6 to 9).

## Description

A network and method for updating a plurality of devices in such a network

The invention relates to a network comprising a plurality of devices interconnected by communication links. It further relates to a method for updating a plurality of devices in such a network.

When the configuration, e.g. configuration parameters, of devices in a network, e.g. automation devices in an industrial automation system, needs to be updated, especially replicated or duplicated, it is necessary for the individual involved to perform a configuration download to each device. The greater the number of devices in the network, the greater the effort required will be.

According to the invention this problem is solved by the network given in claim 1 and the method given in claim 4.

Preferred embodiments of the invention are defined in the remaining claims.

Thus, according to the invention,
- at least one primary master device, e.g. a PLC or an industrial PC with master interface to the network, provides update information for the remaining slave devices,
- one or more predetermined slave devices are enabled to operate in a temporary master mode,
- the primary master device downloads the update information to the predetermined slave devices, and
- the predetermined slave devices switch, when the download is completed, into the temporary master mode for downloading the update information to respective associated ones of the other slave devices.

Preferably, the predetermined slave devices are of different types and the respective other slave devices associated to a respective one of the predetermined slave devices are of the same type. For example, a predetermined level transmitter serves as the temporary master for updating the remaining level transmitters, whereas a predetermined pressure transmitter serves as the temporary master to update the remaining pressure transmitters.

The network is preferably an industrial automation system in which the slave devices are automation devices, e.g. field-mounted process devices such as transmitters and actuators, for executing predetermined functions as part of the automation system.

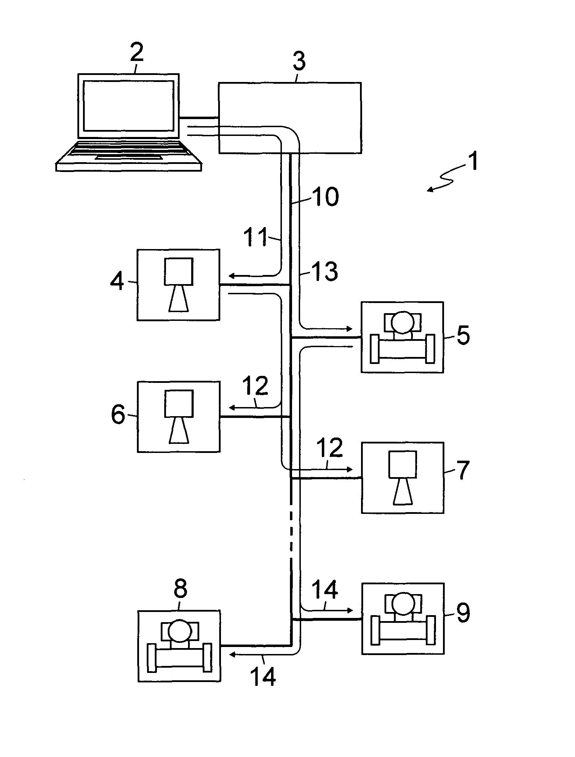

A preferred embodiment of the network according to the invention will be now described with reference to the single figure of the accompanying drawing.

The network 1, which is an industrial automation system, comprises a plurality of devices 2 to 9 interconnected by communication links 19, here mainly a bus system. The device with reference number 2 is an industrial PC which provides update information for the devices 4 to 9 and for that purpose operates as a primary master. The devices 4 to 9 are operated as slave devices under the control of device 3 which is a PLC (Programmable Logic Controller). The devices 4, 6 and 7 may be level transmitters and the devices 5, 8 and 9 may be flow transmitters. A predetermined one of the level transmitters, here device 4, and another predetermined one of the flow transmitters, here device 5, are enabled to operate in a temporary master mode.

As indicated by arrow 11, the primary master device 2 downloads update information intended for level transmitters to the predetermined slave device 4. When the download is completed, the predetermined slave device 4 switches into the temporary master mode for downloading the update information to the respective associated other slave devices 6 and 7 (arrows 12). The respective associated slave devices 6 and 7 may be defined in an address list which is part of the update information. When the replication is complete, the device 4 reverts to slave mode.

In the same way and as indicated by arrow 13 the primary master device 2 downloads update information intended for flow transmitters to the predetermined slave device 5. When the download is completed, the predetermined slave device 5 switches into the temporary master mode for downloading the update information to the respective associated other slave devices 8 and 9 (arrows 14).

## Claims

1. A network (1) comprising a plurality of devices (2 to 9) interconnected by communication links (10), wherein:
- at least one primary master device (2) is designed to provide update information for the remaining slave devices (4 to 9),
- one or more predetermined slave devices (4, 5) are designed to operate in a temporary master mode,
- the primary master device (2) is designed to download the update information to the predetermined slave devices (4, 5), and
- the predetermined slave devices (4, 5) are designed to switch, when the download is completed, into the temporary master mode for downloading the update information to respective associated ones of the other slave devices (6 to 9).

2. The network of claim 1, wherein the predetermined slave devices (4, 5) are of different types and wherein the respective other slave devices (6 to 9) associated to a respective one of the predetermined slave devices (4, 5) are of the same type.

3. The network of claim 1 or 2, wherein the network (1) is an industrial automation system and wherein the slave devices (4 to 9) are automation devices for executing predetermined functions as part of the automation system.

4. A method for updating a plurality of devices (2 to 9) interconnected by communication links in a network (1), wherein:
- at least one primary master device (2) provides update information for the remaining slave devices (4 to 9),
- one or more predetermined slave devices (4, 5) are enabled to operate in a temporary master mode,
- the primary master device (2) downloads the update information to the predetermined slave devices (4, 5), and
- the predetermined slave devices (4, 5) switch, when the download is completed, into the temporary master mode for downloading the update information to respective associated ones of the other slave devices (6 to 9).

5. The method of claim 4, wherein the predetermined slave devices (4, 5) are selected to be of different types and wherein from the respective other slave devices (6 to 9) those of the same type are associated to respective ones of the predetermined slave devices (4, 5).

6. The method of claim 4 or 5 performed in an industrial automation system in which the slave devices (4 to 9) are automation devices for executing predetermined functions as part of the automation system.
